**Europäisches Patentamt**

**European Patent Office**

**Office européen des brevets**

(19)

(11) Veröffentlichungsnummer : **0 113 026**
**B1**

(12) **EUROPÄISCHE PATENTSCHRIFT**

(45) Veröffentlichungstag der Patentschrift :
15.04.87

(51) Int. Cl.⁴ : **H 02 H   3/33**

(21) Anmeldenummer : 83111738.7

(22) Anmeldetag : 23.11.83

(54) Fehlerstromschutzschalter.

(30) Priorität : 02.12.82 DE 3244670

(43) Veröffentlichungstag der Anmeldung :
11.07.84 Patentblatt 84/28

(45) Bekanntmachung des Hinweises auf die Patenterteilung : 15.04.87 Patentblatt 87/16

(84) Benannte Vertragsstaaten :
AT BE CH DE FR GB IT LI

(56) Entgegenhaltungen :
EP-A- 0 039 280
EP-A- 0 085 595
FR-A- 1 523 445
FR-A- 1 553 951
FR-A- 2 106 374
FR-A- 2 502 393
GB-A-  592 468
ELECTRONICS, Band 51, Nr. 10, Mai 1978, New York (US) A. LLOYD: "Low-cost actuator responds to pulses lasting only 100muS", Seite 5E

(73) Patentinhaber : Siemens Aktiengesellschaft Berlin und München
Wittelsbacherplatz 2
D-8000 München 2 (DE)

(72) Erfinder : Stich, Karl-Heinz
Friedrich-Ebert-Strasse 10
D-8400 Regensburg (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es sind Fehlerstromschutzschalter bekannt, in deren Sekundärkreis eines Summenstromwandlers mit einer bei 50 Hz ausreichenden Primärwindungszahl eine Auslöseeinrichtung nach dem Prinzip des Haltemagneten angeordnet ist und bei denen im Sekundärkreis zwischen Summenstromwandler und Auslöseeinrichtung eine Gleichrichteranordnung eingeschaltet ist (EP-A1-0 039 280). Beim bekannten Fehlerstromschutzschalter wird durch die Gleichrichteranordnung ein Fehlerstromschutzschalter nach der sogenannten Speicherlösung aufgebaut. Dabei werden schwache Signale auf der Sekundärseite gespeichert, bis die Höhe des Auslösesignals erreicht ist. Als Speicher dient hierbei ein Kondensator (62 nach Fig. 15 und 16).

Beim eingangs geschilderten bekannten Fehlerstromschutzschalter wird unabhängig von einer Speicherlösung im Sekundärkreis des Summenstromwandlers ein Kondensator vorgesehen, der unter Berücksichtigung der Sekundärwicklung und der Auslösewicklung ein Tiefpaßfilter bildet, so daß auch bei Fehlerströmen mit Gleichstromanteil an die Auslösewicklung ein Sinussignal weitergeleitet wird. Dadurch will man bei Fehlerströmen mit Gleichstromanteil eine Auslösung erreichen, die unabhängig von der Richtung des Fehlerstroms ist.

Es ist bekannt, daß die Gleichrichtung im Sekundärkreis eines Fehlerstromschutzschalters es ermöglicht, einen vereinfachten Auslöser ohne Trafobleche einzusetzen (GB-A-592 468). Dabei kann das Auslöserelais mit einem Dauermagneten arbeiten, um größere Empfindlichkeit zu erreichen.

Doppelweggleichrichtung im Sekundärkreis ist auch eingesetzt worden, um bei pulsierenden Fehlerströmen, also mit Gleichstromanteil, bei einem üblichen polarisierten Relais ein von der Richtung des Fehlerstromes unabhängiges Auslöseverhalten zu erreichen (FR-A-2 502 393).

Um in Reihe angeordnete Fehlerstromschutzschalter selektiv auslösen zu lassen, ist ein Fehlerstromschutzschalter bekannt, in dessen Auslöser ein Dämpfungskreis angeordnet ist (FR-A-1 553-951). Das Magnetfeld, das von der Auslösespule induziert wird, läßt sich so schwächen. Dieser Auslöser kann insbesondere in einem Sekundärkreis mit Gleichrichtung der vom Summenstromwandler induzierten Spannung eingesetzt werden. Zur Dämpfung kann im Magnetkreis des Auslösers neben der Auslösewicklung eine kurzgeschlossene Dämpfungswicklung angeordnet sein, in der ein Teil des von der Auslösewicklung induzierten Magnetfeldes verbraucht wird.

Fehlerstromschutzschalter, die mit einer üblichen Auslöseeinrichtung nach dem Prinzip eines Haltemagneten versehen sind, arbeiten in der Regel bei 50 Hz. Wenn solche Fehlerstromschutzschalter Verbraucher in Netzen mit anderer Frequenz schützen sollen, stört die Frequenzabhängigkeit des Haltemagnetsystems.

Marktübliche Haltemagnete sind bei 50 Hz am empfindlichsten und da ihr Auslösebereich bei niedrigeren Frequenzen und besonders bei höheren Frequenzen zu höheren Auslöseströmen ansteigt, sind besondere Vorkehrungen erforderlich, um ein Auslösen bei geforderten Werten sicherzustellen.

Mit einem üblichen Haltemagnetsystem konnten bisher nur Fehlerstromschutzschalter für einen Einsatz bis maximal 400 Hz bei Nennströmen von 25 A für Nennfehlerströme von 30 mA durch gezielte Maßnahmen im Einzelfall realisiert werden. Um einen Fehlerstromschutzschalter für Betriebsfrequenzen zu ertüchtigen, die von den üblichen 50 Hz abweichen, ist bisher die Primärwindungszahl erhöht worden. Zusätzlich mußte der Prüfstromkreis, mit dem die Einsatztüchtigkeit des Fehlerstromschutzschalters geprüft werden kann, besonders angefertigt bzw. eingestellt werden. Durch solche Maßnahmen entsteht aus einem marktüblichen Fehlerstromschutzschalter eine Sondertype für einen engen Frequenzbereich, der von den üblichen 50 Hz abweicht.

Der Erfindung liegt die Aufgabe zugrunde, Fehlerstromschutz zu erzielen, der im Frequenzbereich der technisch genutzten Frequenzen frequenzunabhängig ist, der also mit anderen Worten: ohne Anpassungsänderungen bei Frequenzen von 16 2/3 Hz bis 30 kHz sicher auslösen und Verbraucher schützen kann.

Die Lösung der geschilderten Aufgabe besteht nach der Erfindung in der Verwendung eines Fehlerstromschutzschalters nach Anspruch 1. Im Sekundärkreis zwischen Summenstromwandler und Auslöseeinrichtung ist also eine Gleichrichteranordnung eingeschaltet. Ein üblicher Fehlerstromschutzschalter mit einem Haltemagneten und einer bei 50 Hz ausreichenden Primärwindungszahl kann dadurch in einem Frequenzbereich von 16 2/3 Hz bis 30 kHz eingesetzt werden. Mit den üblichen Anpassungsmaßnahmen kam man im Einzelfall dagegen nur zu einer Einsatzmöglichkeit bis 400 Hz.

Beim erfindungsgemäßen Fehlerstromschutz ist lediglich durch geeignete Auswahl des Wandlermaterials und der Bewicklung dafür zu sorgen, daß so viel Spannung auf der Sekundärseite induziert wird, daß die Schwellspannung der Gleichrichteranordnung um den Betrag überschritten wird, der zur Auslösung des Haltemagnetsystems bei 50 Hz ausreicht.

Ein Fehlerstromschutzschalter nach der Erfindung kann auch für Fehlerströme mit Gleichstromkomponenten empfindlich gemacht werden. Hierfür kann zwischen der Gleichrichteranordnung und der Sekundärwicklung des Summenstromwandlers in an sich bekannter Weise (DE-C-2 036 497) in Reihen- oder Parallelschaltung ein Kondensator angeordnet werden, der in etwa auf Resonanz auf die Frequenz der Spannung abgestimmt ist, die ein Gleichstromkomponenten enthaltender Fehlerstrom des Primärkreises im Sekundärkreis induziert. Es empfiehlt sich dabei, für den Summenstromwandler ein Kernmaterial mit F-Charakteristik zu verwenden, wie es für sich gesehen zur Erfassung von Fehlerströmen mit Gleichstromkomponenten bekannt ist (DE-B-2 044 302). Diese Maßnahme kann auch ohne Resonanzkondensator ausreichen. Als Kernmaterial eignet sich danach beispielsweise Ultraperm® 80 der Firma Vacuumschmelze GmbH.

Als Gleichrichteranordnung eignet sich insbesondere ein Brückengleichrichter sowie eine Kaskaden- bzw. Villard-Schaltung, ein Delon-Schaltung oder auch eine Delon-Verdopplerschaltung.

Die Erfindung soll nun anhand von in der Zeichnung grob schematisch wiedergegebenen Ausführungsbeispielen näher erläutert werden :

In Figur 1 ist ein frequenzunabhängiger Fehlerstromschutzschalter mit einer Gleichrichteranordnung als Brückengleichrichter wiedergegeben.

In Figur 2 ist ein frequenzunabhängiger Fehlerstromschutzschalter mit einer Gleichrichteranordnung als Kaskaden- bzw. Villard-Schaltung veranschaulicht.

In Figur 3 ist ein Fehlerstromschutzschalter mit Delon-Schaltung dargestellt.

In Figur 4 ist ein Fehlerstromschutzschalter mit einer Gleichrichteranordnung als Delon-Verdopplerschaltung wiedergegeben.

In Figur 5 ist bei einem Fehlerstromschutzschalter nach Fig. 1 veranschaulicht, wie er durch einen Kondensator in Reihenschaltung zwischen Sekundärwicklung und Gleichrichteranordnung für Fehlerströme mit Gleichstromkomponenten empfindlich gemacht werden kann.

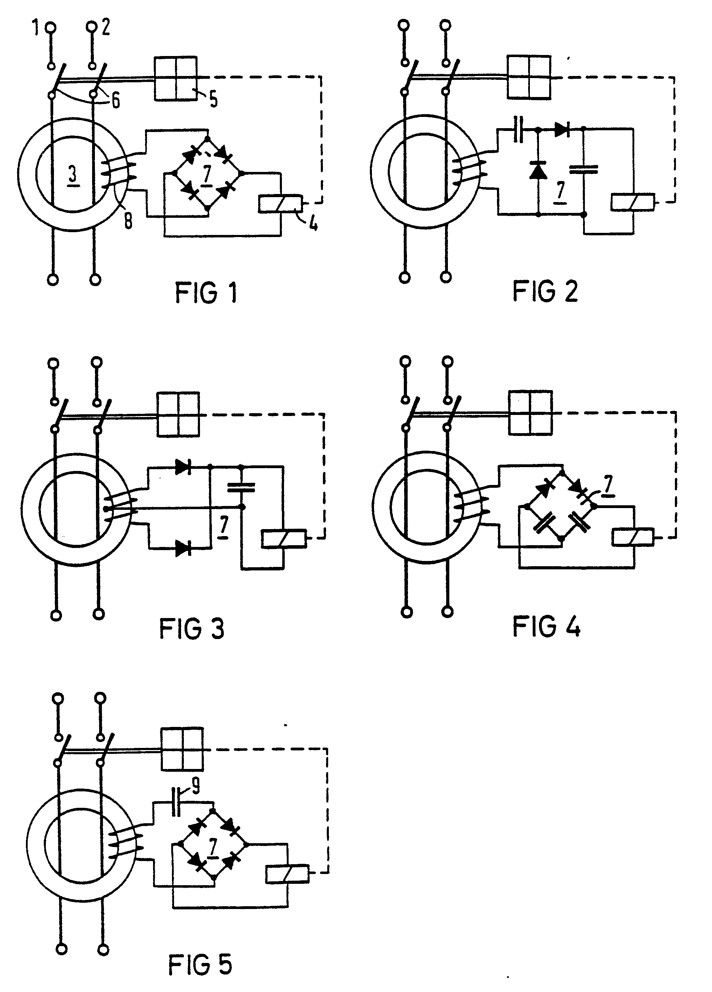

Der Fehlerstromschutzschalter nach Fig. 1 überwacht die Leiter 1 und 2, die als Primärwindungen durch den Summenstromwandler 3 geführt sind. Im Sekundärkreis des Summenstromwandlers ist eine Auslöseeinrichtung 4 nach dem Prinzip eines Haltemagneten angeordnet. Sie steht in Wirkverbindung mit einem Schaltschloß 5, das die Schaltkontakte 6 öffnen kann. Im Sekundärkreis ist zwischen Summenstromwandler 3 und Auslöseeinrichtung 4 eine Gleichrichteranordnung 7 eingeschaltet. Im Ausführungsbeispiel ist die Gleichrichteranordnung 7 als Brückengleichrichter ausgebildet, an dessen einem Brückenzweig die Sekundärwicklung 8 und an dessen anderem Brückenzweig die Auslöseeinrichtung 4 angeschlossen ist. Wesentlich ist, daß auf der Sekundärseite des Summenstromwandlers gleichgerichtete Spannungen keine Frequenzabhängigkeit aufweisen.

Im Ausführungsbeispiel nach Fig. 2 ist die Gleichrichteranordnung 7 als Kaskaden- bzw. Villard-Schaltung ausgebildet. In der Ausführung nach Fig. 3 ist die Gleichrichteranordnung als Delon-Schaltung ausgebildet. Nach Fig. 4 wird eine Delon-Verdopplerschaltung als Gleichrichteranordnung verwendet.

Der Fehlerstromschutzschalter nach Fig. 5 weist im wesentlichen den Aufbau nach Fig. 1 auf. Zwischen der Gleichrichteranordnung 7 und der Sekundärwicklung 8 des Summenstromwandlers ist in einer Reihenanordnung jedoch ein Kondensator geschaltet, der in etwa auf Resonanz auf die Frequenz der Spannung abgestimmt ist, die ein Gleichstromkomponenten enthaltender Fehlerstrom des Primärkreises im Sekundärkreis induziert. Anstelle des Kondensators 9 in Reihenanordnung kann ein Kondensator auch in Parallelschaltung eingesetzt werden. Solche Fehlerstromschutzschalter sprechen nicht nur auf Wechselstrom-Fehlerströme sondern auch auf solche Fehlerströme an, die Gleichstromkomponenten enthalten, bei denen übliche Fehlerstromschutzschalter nicht ansprechen können.

Nach der erfindungsgemäßen Lehre kann jeder serienmäßige Fehlerstromschutzschalter in Wechselstromausführung zu einem frequenzunabhängigen Fehlerstromschutzschalter mit breitem Einsatzgebiet in einfachster Weise durch Hinzufügen einer Gleichrichteranordnung umgerüstet werden. Darüber hinaus kann in der geschilderten Weise auch sichergestellt werden, daß der Fehlerstromschutzschalter auf Fehlerströme mit Gleichstromkomponenten zusätzlich anspricht.

Alle solche Fehlerstromschutzschalter weisen darüber hinaus den Vorteil auf daß sie sicher auslösen, solange Fehlerströme eine verbraucherseitige Gefährdung darstellen, da sie für ihren Betrieb netzunabhängig sind. Andere bekannte elektronische Fehlerstromschutzschalter benötigen hingegen ein intaktes Netz, um arbeiten zu können. Die erfindungsgemäßen Fehlerstromschutzschalter lösen auch dann noch aus, wenn das Netz, z. B. ein Mehrleiternetz, teilweise gestört oder unterbrochen ist, aber ein Fehlerstrom noch fließen kann.

## Patentanspruch

Verwendung eines Fehlerstromschutzschalters, in dessen Sekundärkreis eines Summenstromwandlers (3) mit einer bei 50 Hz ausreichenden Primärwindungszahl eine Auslöseeinrichtung (4) nach dem Prinzip eines Haltemagneten angeordnet ist und bei dem im Sekundärkreis zwischen Summenstromwandler (3) und Auslöseeinrichtung (4) eine Gleichrichteranordnung (7) eingeschaltet ist, als frequenzunabhängigen Fehlerstromschutzschalter in einem Frequenzbereich von 16 2/3 Hz bis 30 kHz.

## Claim

In use, an earth leakage circuit breaker with a sum current transformer (3) having a primary winding of magnitude sufficient at 50 Hz, in whose secondary circuit is arranged a triggering device (4) following the principle of a holding magnet and wherein the secondary circuit between the sum current transformer (3) and the triggering device (4) contains a rectifier arrangement (7), the circuit serving as a frequency-independent earth leakage circuit breaker in a frequency range from 16 2/3 Hz to 30 kHz.

### Revendication

Utilisation d'un disjoncteur de protection contre les courants de défaut, comprenant un dispositif de déclenchement (4) selon le principe d'un aimant de maintien dans le circuit secondaire d'un transformateur de courant totalisateur (3) avec, côté primaire, un nombre de spires qui suffit à 50 Hz, ainsi qu'un dispositif redresseur (7) intercalé dans le circuit secondaire entre le transformateur de courant totalisateur (3) et le dispositif de déclenchement (4), comme disjoncteur de protection contre les courants de défaut, qui est indépendant de la fréquence dans une gamme de fréquences de 16 2/3 Hz à 30 kHz.

FIG 1

FIG 2

FIG 3

FIG 4

FIG 5